# EUROPEAN PATENT APPLICATION

(11) **EP 1 564 191 A1**
(43) Date of publication of application: **17.08.2005**
(21) Application number: 04024036.8
(22) Date of filing: 08.10.2004
(51) Int. Cl.: C03B 37/016

(54) **Process for producing holey fiber preform**

(30) Priority: 13.02.2004 KR 2004009680
(71) Applicant: Samsung Electronics Co., Ltd., Suwon-si, Gyeonggi-do (KR)
(72) Inventor: Baik, Young-Min, Suwon-si Gyeonggi-do (KR); Park, Keun-Deok, Suwon-si Gyeonggi-do (KR); Kim, Soon-Jae, Suwon-si Gyeonggi-do (KR); Kim, Byeong-Sam, Suwon-si Gyeonggi-do (KR); Bang, Jung-Je, Suwon-si Gyeonggi-do (KR)
(74) Representative: Lang, Johannes, Dipl.-Ing.

(57) **Abstract**

Disclosed is a process for producing a holey fiber preform through a sol-gel molding method. The process comprises the steps of: (a) expanding a plurality of elongated tubes, wherein the tubes can be expanded/contracted by control of pressure in the tubes, (b) positioning the expanded tubes in the mold in a predetermined arrangement; (c) introducing a sol gel into the mold; (d) separating the gel from the mold, and contracting the tubes to form elongated air holes in the gel; and (e) removing the tubes. In the process, the tubes for forming air holes can be removed with no impact on the dried gel.

## Description

### BACKGROUND OF THE INVENTION

### 1. Field of the Invention

The present invention relates to a process for producing a holey fiber preform having air holes.

### 2. Description of the Related Art

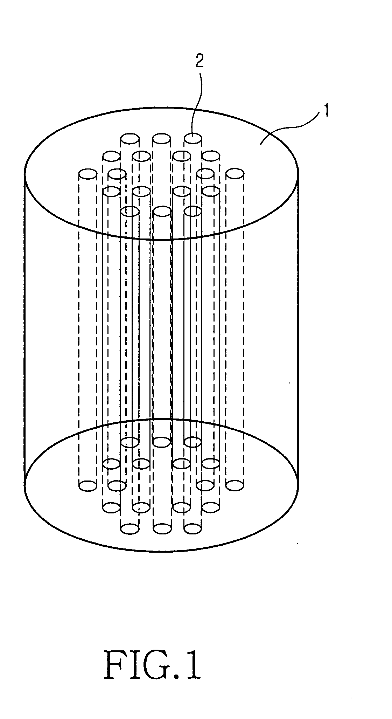

In general, a single-mode fiber transmits data by using light reflection. The reflection is caused by the difference between the refraction index of a core and that of a cladding. The core comprises glass, which has germanium or phosphorus. In contrast, as shown in FIG. 1, a holey fiber is formed of a substantially transparent material of a single solid phase, such as quartz glass 1. It includes air holes 2 extended along the whole length of the fiber parallel to the fiber axis and aligned in a regular arrangement.

Such holey fibers produce a photonic band-gap by using the difference between the dielectric constant of an air layer and that of a quartz glass layer in the regular arrangement. The photonic band-gap provides a photonic stop band to a certain wavelength or to the direction of light wave propagation. In other words, only the lights satisfying the condition of the photonic band-gap passes through the photonic band-gap.

More particularly, light propagation in a holey fiber is accomplished by a photonic band-gap effect and an effective index effect, as described in T. A. Birks et al., Electronic Letters, Vol. 31(22) p. 1941 (October, 1995) and in J.C. Knight et al., Proceeding of OFC, PD 3-1 (February, 1996).

Such holey fibers have many technically important characteristics. For example, such holey fibers can support a single-mode over a broad range of wavelengths and can have a broad mode band. Accordingly, they can transmit a high optical power and can represent a large phase dispersion at a remote communication wavelength of 1.55 µm. Additionally, they are important as a device for increas- ing/reducing non-linearity and for controlling light polarization. Therefore, it is expected that holey fibers may be applied in a broad range of (current and future) light communication industries, as the characteristics of the multi-functional photonic crystal fiber have been reported continuously.

Conventional methods for producing a holey fiber preform include a glass stacking method, a glass drilling method and a sol-gel molding method.

The glass stacking method is a process for producing a preform by repeatedly carrying out the steps of: stacking glass tubes in a desired shape, and binding and elongating the stacked glass tubes. However, the glass stacking method comprises an assembling step using manual manipulation. This may cause contaminations in various parts during the assembling step. Therefore, the contaminated parts need to be washed repeatedly. Consequently, the glass stacking method has a high production cost and is a time consuming process.

The glass drilling method is a process in which air holes are formed by drilling holes in glass. However, the drilling method has disadvantages in that it is difficult to clean the inside of air holes and it is costly to process hard glass.

The sol-gel molding method is a process for producing a holey fiber preform by: positioning a plurality of bars for forming air holes in a longitudinal cylindrical mold, introducing liquid raw materials into the mold, gelling the raw materials, removing the bars for forming air holes and then sintering. The sol-gel molding method has advantages of being a simple working process and has significantly low production costs. However, a conventional sol-gel molding method utilizes a bar formed of a solid material for forming air holes. Thus it has a disadvantage in that it is difficult to remove the bar with no impact on the gel. For example, an impact applied to one air hole in the gel may generate cracks in the following drying and heat-treating steps, thereby adversely affecting the whole preform.

### SUMMARY OF THE INVENTION

Accordingly, the present invention has been made to reduce or overcome the above-mentioned problems occurring in the prior art. One object of the present invention is to provide a process for producing a holey fiber preform through a sol-gel molding method by using a material for forming air holes, in which the material for forming air holes can be removed with no impact on the dried gel.

In accordance with the principles of the present invention, a process for producing a holey fiber preform is provided. The process includes the steps of: (a) expanding a plurality of elongated tubes, wherein the tubes can be expanded/contracted by control of pressure in the tubes, (b) positioning the expanded tubes in the mold in a predetermined arrangement; (c) introducing a sol gel into the mold; (d) separating the gel from the mold and contracting the tubes to form elongated air holes in the gel; and (e) removing the tubes.

Preferably, it is possible to control the light transmission characteristic of the holey fiber obtained from the preform produced by the process through the arrangement of the tubes for forming air holes or the interval among the air holes.

More preferably, the elongated tubes have elasticity, or they are expanded as the pressure in the tubes increases and they are contracted as the pressure in the tubes decreases.

### BRIEF DESCRIPTION OF THE DRAWINGS

The present invention will be more apparent from the following detailed description taken in conjunction with the accompanying drawings, in which:
- FIG. 1: is a schematic diagram showing the structure of a conventional holey fiber preform;
- FIG. 2: is a flow chart for the process for producing a holey fiber preform according ing to an embodiment of the present invention; and
- FIG 3: is an illustrative diagram of a mold used in an embodiment of the present invention.

### DETAILED DESCRIPTION OF THE INVENTION

Hereinafter, embodiments of the present invention will be described with reference to the accompanying drawings. In the following description, the same elements will be designated by the same reference numerals although they are shown in different drawings. Further, for the purposes of clarity and simplicity, a detailed description of known functions and configurations incorporated herein will be omitted as it may make the subject matter of the present invention unclear.

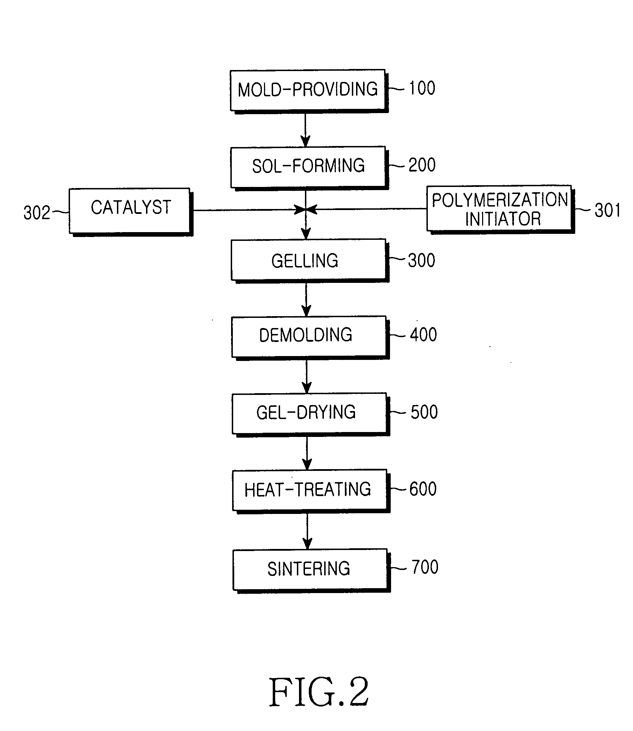

FIG. 2 is a flow chart for the process for producing a holey fiber preform according to an embodiment of the present invention. As shown in FIG. 2, the method for producing a holey fiber preform according to the present invention includes: a mold-providing step 100; a sol-forming step 200; a gelling step 300; a demolding step 400; a gel-drying step 500; a heat-treating step 600; and a sintering step 700.

In the mold-providing step 100, a mold for forming a holey fiber preform is provided, in which tubes for forming air holes are positioned in a predetermined arrangement.

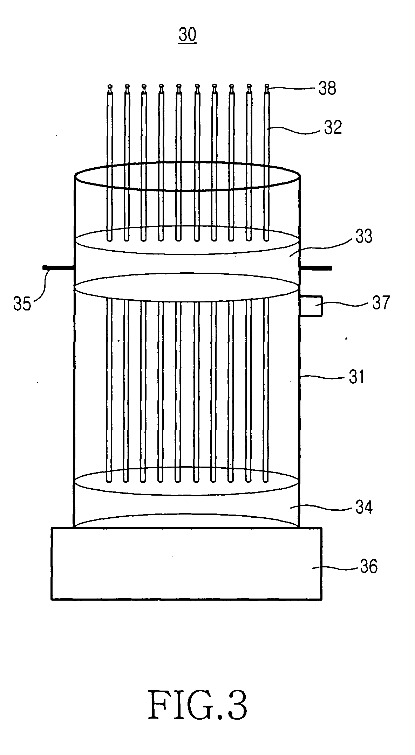

FIG. 3 is an illustrative diagram of a mold used in an embodiment of the present invention. As shown in FIG. 3, the mold 30 includes a cylindrical container 31, a plurality of elongated tubes 32, for example bar-shaped and the like, for forming air holes, an upper and a lower pin holders 33, 34 for determining the arrangement of the air holes, a fixing bolt 35 for fixing the upper pin holder 33 to the container 31, a bottom cap 36 and a sol inlet 37. More particularly, the bar-shaped tube 32 is formed of an elastic material, for example, a polymer tube and the like, and is equipped with an inlet 38 for a fluid material. In addition, the tube 32 can be expanded or contracted according to the inside pressure controlled by the fluid material introduced through the inlet 38.

In the sol-forming step 200, a silicon alkoxide or fumed silica, which is a starting material for producing a silica glass, is transformed into a sol state. The sol-forming step, using a silicon alkoxide as a starting material, is carried out by adding a solvent such as an alcohol or water to the silicon alkoxide in order to hydrolyze it. When fumed silica is used as a starting material, the sol forming step is carried out by adding a dispersing agent, a plasticizer, etc., to the fumed silica, dispersing the mixture in deionized water to form sol, and aging the sol for a predetermined time.

In the gelling step 300, the sol obtained from step 200 is introduced into a mold having a predetermined shape, for example, a mold 30 as shown in FIG. 3. Then, it is gelled by adding a polymerization initiator 301, a catalyst 302, or the like. Next, a fluid material such as air or a liquid material is introduced to the inside of the bar-shaped tubes 32 to form air holes through the inlet 38 for a fluid material. In this manner, the inside pressure increased so that the tubes 32 may be maintained in an expanded state.

In the demolding step 400, the gel obtained after the completion of the gelling step 300 is separated from the mold. During this time, the bar-shaped tubes 32 for forming air holes remain in the gel.

In the gel-drying step 500, the gel separated from the mold is dried to form a dried gel. For example, the gel is dried in a constant temperature and humidity unit at a temperature of 20-50 °C under a relative humidity of 70-95% for one week. The pressure inside of each bar-shaped tube is controlled, so that the tube can be maintained in the gel with no damage on the gel, even if the gel contracts during the drying step. The bar-shaped tubes 32 for forming air holes can be removed after the completion of the gel-drying step, or in the following heat-treating step. The bar-shaped tubes 32 are removed by discharging the fluid material to the outside of the tubes through the inlet 38 for a fluid material to decrease the inside pressure of each tube 32 to contract the tube 32. When the gel is completely dried, the gel has some rigidity, and thus the tube 32 can be removed with no impact on the gel. Additionally, a water repellent, a release agent, etc. may be coated on the outer surface of the bar-shaped tube 32 in order to prevent the tube from adhering to the gel.

In the heat-treating step 600, the dried gel is heat treated to remove residual moisture and additional organic substances remaining in the gel. In order to perform the heat-treating step 600, the dried gel is heat treated at a temperature between 300°C and 700°C to remove the residual moisture and additional organic substances contained in the gel. It is further heat treated at a temperature between 300°C and 1200°C to remove residual OH groups remaining in the gel.

Finally, in the sintering step 700, the crude gel is sintered and vitrified. In order to perform the sintering step 700, the gel is heat treated at a temperature between 1100°C and 1600°C in the presence of helium gas supply, or under vacuum atmosphere, thereby providing a high-purity silica glass as a holey fiber preform.

As described above, the process for producing a holey fiber preform through a sol-gel molding method according to the present invention utilizes bar-shaped tubes for forming air holes, which have elasticity or which is formed of a material capable of expanding/contracting by the control of the inside pressure. Thus, it can prevent the gel from cracking by the impact generated when the gel is dried or the tubes for forming air holes are removed.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for producing a holey fiber preform using a mold, the method comprising the steps of:
(a) expanding a plurality of elongated tubes, wherein the tubes can be expanded/contracted by control of pressure in the tubes,
(b) positioning the expanded tubes in the mold in a predetermined arrangement;
(c) introducing a sol gel into the mold;
(d) separating the gel from the mold and contracting the tubes to form elongated air holes in the gel; and
(e) removing the tubes.

2. The method for producing a holey fiber preform as claimed in claim 1, wherein the mold is a cylindrical mold.

3. The method for producing a holey fiber preform as claimed in claim 1, wherein the plurality of elongated tubes is a plurality of bar-shaped tubes.

4. The method for producing a holey fiber preform as claimed in claim 1, wherein the step (c) of introducing a sol gel includes introducing silica containing sol into the mold and gelling the sol.

5. The method for producing a holey fiber preform as claimed in claim 1, wherein the step (d) of introducing a sol gel includes forming elongated air holes in a longitudinal direction in the gel.

6. The method for producing a holey fiber preform as claimed in claim 1, wherein the step (e) of introducing a sol gel includes drying the gel in which air holes are formed, removing the tubes and sintering the dried gel.

7. The method for producing a holey fiber preform as claimed in claim 1, wherein the holey fiber obtained from the preform produced by the process has a light transmission characteristic which can be controlled through arrangement of the tubes for forming air holes or an interval between the air holes.

8. The method for producing a holey fiber preform as claimed in claim 1, wherein the elongated tubes have elasticity, and are expanded as the pressure in the tubes increases and are contracted as the pressure in the tubes decreases.

9. The method for producing a holey fiber preform as claimed in claim 1, wherein the elongated tubes are formed of a polymer material.

10. The method for producing a holey fiber preform as claimed in claim 1, wherein the pressure in the tubes of the elongated tubes are controlled by an amount of a fluid material introduced into the tubes.

11. The method for producing a holey fiber preform as claimed in claim 10, wherein the fluid material comprises air or a liquid material.

12. The method for producing a holey fiber preform as claimed in claim 1, wherein a water repellent and a release agent are coated on an outer surface of the elongated tubes in order to prevent the tubes from adhering to the gel.

13. The method for producing a holey fiber preform as claimed in claim 1, wherein the elongated tubes are arranged in a form of a photonic lattice structure in step (b).

14. The method for producing a holey fiber preform as claimed in claim 1, wherein the elongated tubes are irregularly arranged in step (b).

15. The method for producing a holey fiber preform as claimed in claim 1, wherein step (c) includes hydrolysis of a silicon alkoxide as a starting material.

16. The method for producing a holey fiber preform as claimed in claim 1, wherein step (c) includes dispersing and aging fumed silica as a starting material.

17. A method for producing a holey fiber preform as claimed in claim 1, wherein step (e) includes:
drying the molded gel separated from the mold to obtain a dried gel;
removing the tubes;
heat treating the dried gel to remove moistures and impurities contained in the dried gel; and
sintering and vitrifying the dried gel.
